# EUROPEAN PATENT APPLICATION

(11) **EP 4 472 278 A1**
(43) Date of publication of application: **04.12.2024**
(21) Application number: 23747378.0
(22) Date of filing: 27.01.2023
(51) Int. Cl.: H04W 28/02, H04L 47/24, H04W 8/04

(54) **METHOD AND DEVICE FOR CONTROLLING TRAFFIC**

(30) Priority: 28.01.2022 KR 20220013336; 26.01.2023 KR 20230009857
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: Brevalex
(86) International application number: PCT/KR2023/001259
(87) International publication number: WO 2023/146337

(57) **Abstract**

Provided are a device and a method for controlling data traffic by a core network control plane node. The method may include receiving, from an application function control entity, one or more pieces of information among help information on application traffic characteristics, a PDU-Set QoS parameter, an identifier for grouping flows belonging to a multi-modal application, and a synchronization threshold; transmitting, to a base station, one or more pieces of information among help information on application traffic characteristics, a PDU Set QoS parameter, an identifier for grouping flows belonging to a multi-modal application, and a synchronization threshold during a PDU session establishment or modification procedure; and instructing transmission of a user packet including PDU-Set information to a core network user plane node.

## Description

### Technical Field

The disclosure relates to technology for controlling XR and media service traffic in a mobile communication network.

### Background Art

extended reality (XR) and cloud gaming (CG) are broad terms referring to various types of augmented, virtual, and mixed environments in human-machine and human-human communication performed with the help of handheld and wearable terminals. extended reality (XR) is used as a broad term encompassing augmented reality (AR), mixed reality (MR), and virtual reality (VR). Cloud gaming represents a use case in which most computations related to gaming are offloaded from a terminal to an edge or remote server. XR applications and cloud computing/gaming typically require high throughput and low latency.

Many XR and CG use cases are characterized by quasi-periodic traffic with a high data rate (having a possible jitter) in a downlink video stream. There are often paired with with a frequent uplink transmission (e.g., pose/control updates) and/or uplink video stream. Both downlink and uplink traffic must adhere to a relatively strict packet delay budget (PDB).

Many XR and CG terminals have limited battery power. However, the current discontinuous reception (DRX) configuration is unsuitable due to the non-integer period of XR traffic, variable XR data rate, and the quasi-periodic nature of XR period.

Further, the range of expected XR and CG services exhibit considerable diversity. Data streams (e.g., video) may change on the fly while the service is running through a radio network (e.g., NR).

Within a single frame, packets may depend on each other. The application may require all packets to decode a corresponding frame. The loss of even a single packet may, despite the successful transmission of other related packets, render the entire set ineffective. For example, requirements for XR applications may be specified in terms of application data units (ADUs)/media units rather than single packets/PDUs.

Packets, even when positioned differently within various frame types (I/P frame) or group of picture (GoP), through part of the same video stream, may contribute differently to user experience. Accordingly, implementing layered QoS handling in the video stream may loosen requirements and enhance efficiency.

If additional information from higher layers of the service or application may be available, it may facilitate the selection of a radio parameter. To that end, there is a demand for a technique that enables the communication network to effectively recognize and process XR application traffic.

### Detailed Description of the Invention

### Technical Problem

The disclosure provides a method and device that enable communication network nodes to effectively recognize and process XR application traffic.

### Technical Solution

In an aspect, the disclosure may provide a method for controlling data traffic a core network control plane node. The method may include an information reception step of receiving, from an application function control entity, one or more pieces of information among assistance information for an application traffic characteristic, a PDU-Set QoS parameter, an identifier for grouping flows belonging to a multi-modal application, and a synchronization threshold, an information transmission step of transmitting, to a base station during a PDU session establishment or modification procedure, one or more of the assistance information for the application traffic characteristic, the PDU Set QoS parameter, the identifier for grouping the flows belonging to the multi-modal application, and the synchronization threshold, and a step of controlling to instruct a core network user plane node to transmit a user packet including PDU-Set information.

In another aspect, the disclosure may provide a method for controlling data traffic by a base station. The method may include an information reception step of receiving, from a core network control plane node, one or more pieces of information among assistance information for an application traffic characteristic, a PDU-Set QoS parameter, an identifier for grouping flows belonging to a multi-modal application, and a synchronization threshold, configuring a radio bearer for application traffic using information received from the core network control plane node, and receiving PDU-Set information from a core network user plane node.

In another aspect, the disclosure may provide a core network control plane node controlling data traffic. The core network control plane node may include a receiver configured to receive, from an application function control entity, one or more pieces of information among assistance information for an application traffic characteristic, a PDU-Set QoS parameter, an identifier for grouping flows belonging to a multi-modal application, and a synchronization threshold, a transmitter configured to transmit, to a base station during a PDU session establishment or modification procedure, one or more of the assistance information for the application traffic characteristic, the PDU Set QoS parameter, the identifier for grouping the flows belonging to the multi-modal application, and the synchronization threshold, and a controller controlling to instruct a core network user plane node to transmit a user packet including PDU-Set information.

In another aspect, the disclosure may provide a base station controlling data traffic. The base station may include a receiver configured to receive, from a core network control plane node, one or more pieces of information among assistance information for an application traffic characteristic, a PDU-Set QoS parameter, an identifier for grouping flows belonging to a multi-modal application, and a synchronization threshold, and a controller configured to set upa radio bearer for application traffic using information received from the core network control plane node, wherein the receiver further receives PDU-Set information from a core network user plane node.

### Advantageous Effects

According to embodiments, communication network nodes may be enabled to effectively recognize and process XR application traffic.

### Brief Description of Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure;
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of a structure for representing a 5G-XR function in a 5G system;
FIG. 9 is a flowchart illustrating operations of a core network control plane node according to an embodiment;
FIG. 10 is a flowchart for describing operations of a base station according to an embodiment;
FIG. 11 is a block diagram illustrating a core network control plane node according to an embodiment; and
FIG. 12 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

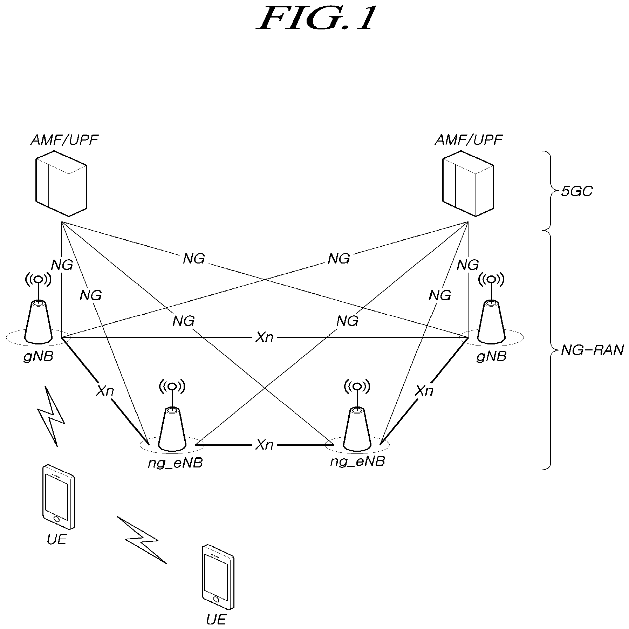

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

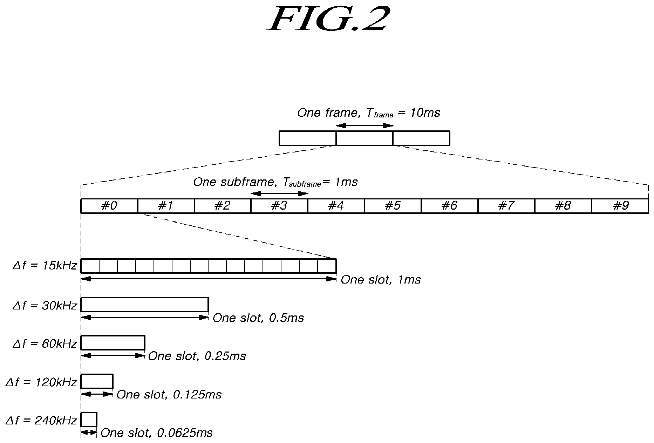

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

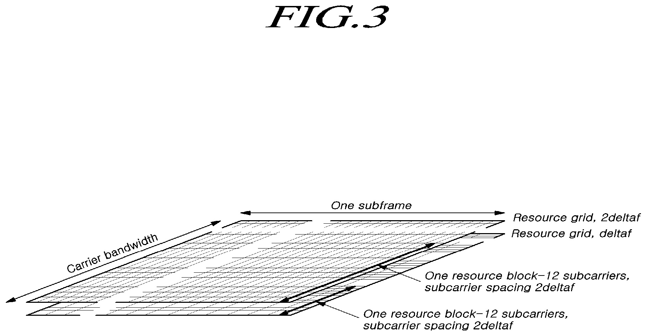

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

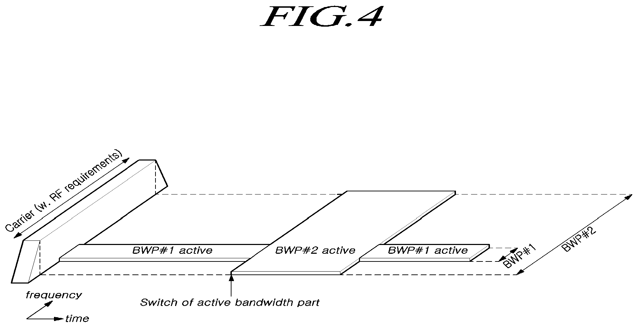

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

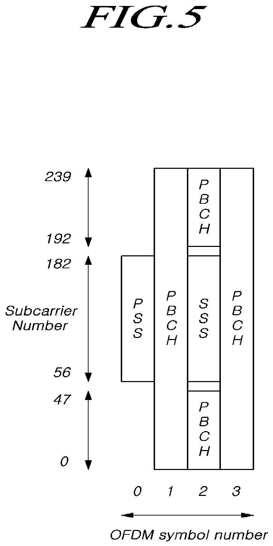

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB 1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

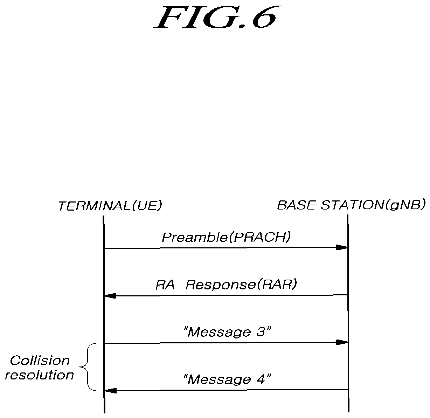

FIG. 6 is a view for explaining a random access procedure in a radio access.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

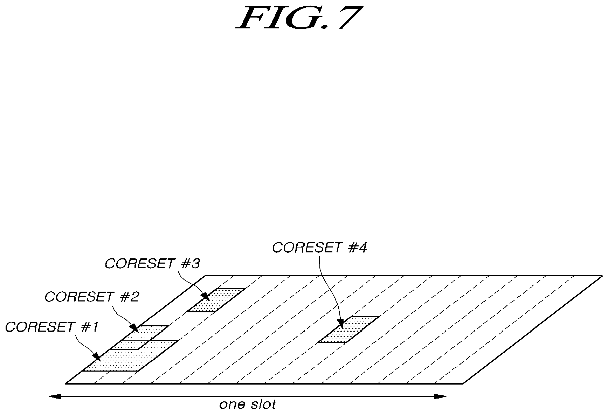

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

extended reality (XR) and cloud gaming (CG) are broad terms referring to various types of augmented, virtual, and mixed environments in human-machine and human-human communication performed with the help of handheld and wearable terminals. extended reality (XR) is used as a broad term encompassing augmented reality (AR), mixed reality (MR), and virtual reality (VR). Cloud gaming is a scenario where most gaming related computations are transferred from a terminal to an edge or remote server. XR applications along with cloud computing/gaming typically require high throughput and low latency.

Many XR and CG use cases feature quasi-periodic traffic with high data rates (having a possible jitter) in a downlink video stream, accompanied by frequent uplink transmissions (e.g., pose/control updates) and/or uplink video stream. Both downlink and uplink traffic are characterized by a relatively tight packet delay budget (PDB).

Many XR and CG terminals are constrained by limited battery power. However, the current discontinuous reception (DRX) configuration settings are inadequate due to the non-integer XR traffic period, variable XR data rate, and quasi-periodic XR period.

The range of expected XR and CG services displays significant diversity. Data streams (e.g., video) may dynamically change while the service is being transmitted over a radio network (e.g., NR).

Packets within a single frame may depend on each other. The application may require all packets to decode a corresponding frame. The loss of one packet may, despite the successfully transmission of other related packets, render the corresponding packets ineffective. For example, XR application may have requirements based application data units (ADUs)/media units rather than single packets/PDUs.

Packets, even when positioned differently within various frame types (I/P frame) or group of picture (GoP), though part of the same video stream, may impact the user experience differently. Accordingly, implementing layered QoS handling in the video stream may relax requirements and enhance efficiency.

Utilizing additional information from the higher layer of a service or application may simplify the selection of a radio parameter.

However, typical mobile communication technology does not provide a specific method for enabling a terminal/base station/core network to effectively recognize and process XR application traffic.

As conceived to address the foregoing issues, the disclosure introduces a technology for enabling QoS processing by leveraging additional information or fields associated with a service or application, taking into account the specific characteristics of traffic.

Hereinafter, a control technology (e.g., method and device) will be described based on 5GS/NR technology. However, this is for convenience of description, and embodiments are not limited thereto. For example, the embodiments may be applied to any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and the content of operations. Although the disclosure does not contain the content of the UE operation related to the definitions for the corresponding information elements, the corresponding content set forth in the standards which are known art may be incorporated in the embodiments.

Any function described below may be defined as an individual user equipment (UE) capability and may be transmitted to a base station/core network entity (e.g., AMF/SMF) by the UE. Alternatively, any functions may be combined/merged to be defined as the corresponding UE capability and transmitted to the base station/core network entity by the UE.

For convenience of description, an application data unit (ADU) or PDU-set may denote one or more PDUs for transferring a payload of unit information generated in an application/application layer, a unit divided by the application/application layer, or a unit divided within the application, or a unit having a correlation between data/stream/packets, or a unit having dependency between data/stream/packets or a unit divided with different traffic characteristics/streams within one flow, a unit divided with different traffic characteristics/streams within one PDU session, or a unit divided based on any information/field/metadata included/used/added in the application. This is only for convenience of description. The embodiments are not limited thereto. The application data unit (ADU) or PDU-set may be replaced with any other term such as a media unit (MU), an application packet data unit, a group of picture (GoP) unit, a traffic type (e.g., XR viewer pose information unit, tactile information, video, audio, degree of freedom) specific unit, frame type, stream type, or the like.

An application data unit (ADU) or a PDU-set may include one or more PDUs that transfer a payload of information of one unit (e.g., an XRM service frame or video slice used in TR 26.926) generated at an application program level. All PDUs in the PDU set are required in the application layer to use the corresponding information unit. Alternatively, the application layer may still recover all or some of the information units when some PDUs are missing.

In the disclosure, function may be described as meaning a protocol, an entity, or a node for providing a corresponding function in a core network. For example, an access and mobility management function (AMF) serves as a passage for a non-access stratum (NAS) message for the UE to access the network, an authentication procedure of the UE, or a gateway for the UE to communicate with the core network such as authentication procedure of the UE or mobility management entity. Therefore, AMF is used to mean including a function, protocol, procedure, entity, or node. Further, node in the disclosure may refer to an entity.

Meanwhile, the functions described below may be performed individually and independently. Functions described below may be arbitrarily combined/merged and it is obvious that they are also included in the scope of present embodiments.

Any information about the XR application described below may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate the average (expected value)/minimum/maximum/standard deviation values. For example, the information 'update rate' may mean an average (expected value)/minimum/maximum/standard deviation update rate. This is for convenience of description, and all the information in the disclosure may be used as statistical information. Alternatively, it may be information preconfigured in the UE/network or provisioned through OAM/application server/application function/UDM.

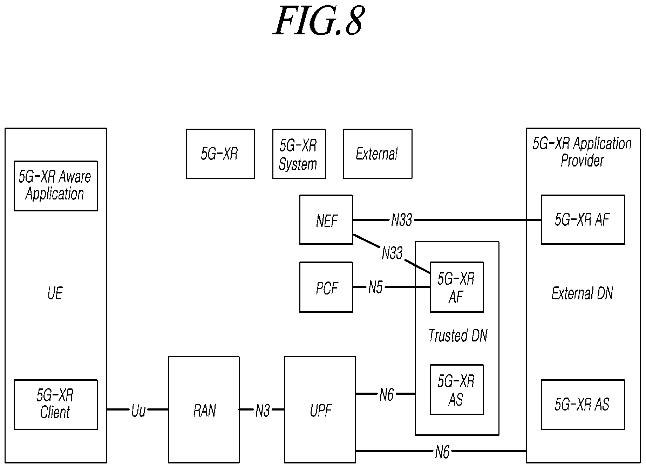

FIG. 8 is a view illustrating an exemplary structure of a 5G-XR function in a 5G system. For convenience of description, the embodiments will be described based on FIG. 8. However, the embodiments are not limited thereto. The embodiments may be equally applied to any system/radio access technology (e.g., LTE or 6G).

Referring to FIG. 8, 5G-XR AF indicates an application function for a 5G-XR service. 5G-XR AS indicates an application server for a 5G-XR service. 5G-XR client indicates an internal function of a UE for a 5G-XR service. In the UE, the XR client may indicate a transceiver of an XR session accessed through APIs or the like by an XR application. The XR client may perform communicate/signaling with 5G-XR AF to configure/control/support an XR session (or delivery of the XR session). The XR client may access XR data and communicate with the 5G-XR AS to process corresponding data. 5G-XR AF provides various control functions for processing the XR session on the UE. may perform signaling with PCF/NEF for QoS control. 5G-XR AS indicates an application server that hosts 5G XR media and media functions.

Hereinafter, operations of a core network control plane node and a base station for effectively controlling XR application data traffic according to an embodiment will be described.

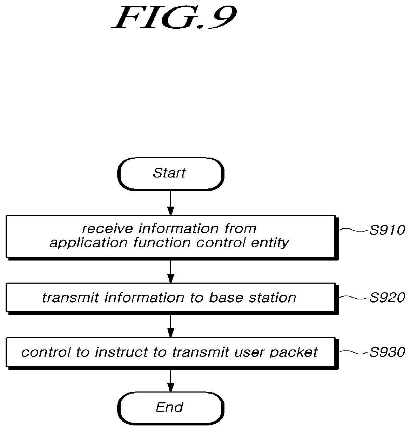

FIG. 9 is a flowchart illustrating operations of a core network control plane node according to an embodiment.

Referring to FIG. 9, in a method for controlling data traffic, a core network control plane node may perform an information reception step of receiving, from an application function control entity, one or more pieces of information among assistance information for application traffic characteristics, a PDU-Set QoS parameter, an identifier for grouping flows belonging to a multi-modal application, and a synchronization threshold (S910).

Here, the application traffic may refer to specific data traffic such as XR.

According to an embodiment, the assistance information for the application traffic characteristics may include at least one of i) periodic information of uplink traffic or downlink traffic of the QoS flow and ii) jitter range information associated with the periodic information. In other words, the assistance information for the application traffic characteristics may include periodic information about a period of generating the uplink data traffic or downlink data traffic , and the jitter range information associated with the corresponding period information.

The period information for uplink or downlink traffic may support a non-integer value. For example, the period information for uplink or downlink traffic may be set to a non-integer value as well as an integer value. For example, the period information may be set to support up to a decimal point, such as O.XXXms.

According to an embodiment, the PDU-Set QoS parameter may include a parameter indicating a service quality set in association with the PDU-Set.

According to an embodiment, using an identifier for grouping flows belonging to a multi-modal application, data flows belonging to an application configured to exchange information through various interfaces may be grouped into one or more. In this case, the corresponding grouping may be performed through the identifier for grouping flows belonging to the multi-modal application. Alternatively, the corresponding groups may be distinguished through the identifier for grouping flows belonging to the multi-modal application.

According to an embodiment, a synchronization threshold may include threshold information for a delay time difference between flows associated with the multi-modal application having one group identifier. Further, the synchronization threshold may be set in association with the identifier for grouping flows belonging to the multi-modal application.

The assistance information may be received from the application function or may be generated by the core network control plane node. When the core network control plane node generates the assistance information, the application function may initiate the generation of the assistance information.

Meanwhile, the core network control plane node may perform an information transmission step of transmitting one or more of assistance information for application traffic characteristics, a PDU Set QoS parameter, an identifier for grouping flows belonging to a multi-modal application, and a synchronization threshold to the base station during the PDU session establishment or modification procedure (S920).

When the core network control plane node receives the information from the application function control entity in step S910, the core network control plane node may transfer the corresponding information to the base station. To that end, the core network control plane entity may use an interface between the core network and the base station.

Alternatively, the core network control plane node may include the above-described information in the message used in the PDU session establishment or modification procedure and transfer the message to the base station. For example, the above-described information may be included in a message defined within a corresponding procedure such as a PDU session establishment/modification request message, a PDU session establishment/modification response message, a PDU session establishment/modification complete message, or the like. As another example, the above-described information may be included in a PDU SESSION RESOURCE SETUP REQUEST message or a PDU SESSION RESOURCE MODIFY REQUEST message.

Further, the core network control plane node may perform a step of controlling operations to instruct the core network user plane node to transmit a user packet including PDU-Set information (S930).

The core network control plane node may control operations to transmit PDU-Set information for application data traffic to the core network user plane node. For example, the core network user plane node may be a user plane function (UPF).

The core network user plane node may transmit the user plane information to the base station using the received PDU-Set information.

For example, the PDU-set information may include at least one of a PDU-Set sequence number, a PDU-Set end PDU, and PDU-Set importance.

Further, the core network user plane node may transfer the received PDU-Set information to the base station.

Meanwhile, the sequence of steps S920 and S930 described above may be altered. In other words, the core network control plane node may initially transmit PDU-Set information to the core network user plane node and then may transmit the above-described application traffic-related information to the base station. Alternatively, the core network control plane node may simultaneously transmit both PDU-Set information and application traffic-related information.

Further, the core network control plane node may transmit/receive various information to and from the base station and the core network user plane node to effectively control application data traffic such as XR. Hereinafter, procedures according to embodiments will be described in detail.

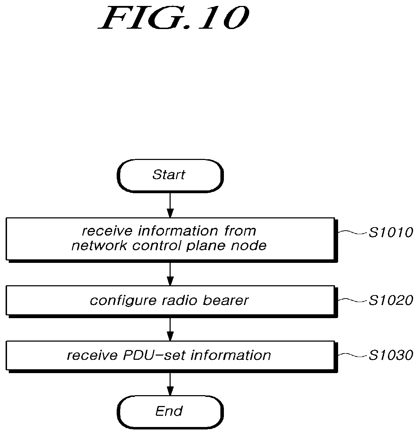

FIG. 10 is a flowchart for describing operations of a base station according to an embodiment.

Referring to FIG. 10, in a method for controlling data traffic, a base station may perform an information reception step of receiving, from a core network control plane node, one or more pieces of information among assistance information for application traffic characteristics, a PDU-Set QoS parameter, an identifier for grouping flows belonging to a multi-modal application, and a synchronization threshold (S1010).

According to an embodiment, the assistance information for the application traffic characteristics may include at least one of i) periodic information for a period of uplink traffic or downlink traffic of the QoS flow and ii) jitter range information associated with the periodic information. In other words, the assistance information may include periodic information on a period of generating the uplink data traffic or downlink data traffic, and ii) the jitter range information associated with the corresponding period information.

The period information for uplink or downlink traffic may support a non-integer value. For example, the period information for uplink or downlink traffic may be set to a non-integer value as well as an integer value. For example, the period information may be set to support up to a decimal point, such as O.XXXms.

As another example, the PDU-Set QoS parameter may include a parameter indicating a service quality set in association with the PDU-Set.

As another example, using an identifier for grouping flows belonging to a multi-modal application, data flows belonging to an application configured to exchange information through various interfaces may be grouped into one or more. In this case, the corresponding grouping may be performed through the identifier for grouping flows belonging to the multi-modal application. Alternatively, the corresponding groups may be distinguished through the identifier for grouping flows belonging to the multi-modal application.

As another example, a synchronization threshold may include threshold information for a delay time difference between flows associated with the multi-modal application having one group identifier. Further, the synchronization threshold may be set in association with the identifier for grouping flows belonging to the multi-modal application.

The above-described application function or the core network control plane node may be generated.

The base station may receive the above-described information through an interface between the core network and the base station. For example, the base station may receive the above-described information from the core network control plane node through a message used in the PDU session establishment or modification procedure. For example, the above-described information may be included in a message defined within a corresponding procedure such as a PDU session establishment/modification request message, a PDU session establishment/modification response message, a PDU session establishment/modification complete message, or the like. As another example, the above-described information may be included in a PDU SESSION RESOURCE SETUP REQUEST message or a PDU SESSION RESOURCE MODIFY REQUEST message.

The base station may perform a step of configuring a radio bearer for the application traffic using the information received from the core network control plane node (S1020).

The base station may configure a radio bearer for application data traffic using the received information. The corresponding radio bearer may be configured to match the characteristic information about the application data traffic and may be configured to transmit/receive data according to a period set to a non-integer value.

Meanwhile, the base station may perform a step of receiving PDU-set information from the core network user plane node (S 1030).

For example, the PDU-set information may include at least one of a PDU-Set sequence number, a PDU-Set end PDU, and PDU-Set importance.

Further, the core network user plane node may transfer the PDU-Set information to the base station.

Meanwhile, the sequence of steps S 1020 and S 1030 described above may be altered. In other words, the base station may configure the radio bearer after receiving the PDU-Set information or may configure the radio bearer using the application traffic-related information received from the core network control plane node. When the base station configures the radio bearer after receiving the PDU-Set information, the radio bearer may be configured using the PDU-Set information and the above-described application traffic-related information.

Further, the base station may transmit/receive various information to and from the core network control plane node or the core network user plane node to effectively control application data traffic such as XR. Hereinafter, more embodiments will be described in detail.

Various embodiments for effectively processing specific application data traffic such as XR will be described below. The embodiments described below may be applied individually or in any combination.

### Additional embodiment of QoS characteristics for XR application

5G QoS characteristic information (characteristics) associated to 5QI in typical 5GS/NR technology is as follows.
1 Resource type (Non-GBR, GBR, Delay-critical GBR);
2 Priority Level;
3 Packet Delay Budget (including Core Network Packet Delay Budget);
4 Packet Error Rate;
5 Averaging window (for GBR and Delay-critical GBR resource type only);
6 Maximum Data Burst Volume (for Delay-critical GBR resource type only).

The 5G QoS characteristic information may be used as a guideline for setting a node-specific parameter for each QoS flow. Standardized or preconfigured 5G QoS characteristic information for XR (specific data traffic) may be defined and indicated through a 5QI value. Alternatively, the 5QI value may be indicated together with additional identification information and/or additional QoS characteristic information. For example, additional identification information and/or additional QoS characteristic information may be indicated in association for units divided in the application or for units having correlation/dependency.

The signaled 5G QoS characteristic information may be provided as a portion of the QoS profile. XR media delivery is typically provided based on download and adaptive streaming. Therefore, there is a part that may be adjusted through the bit rate. However, QoS characteristic information may be added to effectively support QoS for various XR data streams such as viewpoint-dependent streaming.

For example, the XR UE uses tracking information. To use pose information/tracking information for an adaptive media processing request, current pose information/tracking information may be transmitted to an application function (XR AF)/application server (AS). Pose information/tracking information may be shared/updated to access related information considering the current viewpoint. Tracking/sensor data in the XR device may be processed for XR rendering. Media may be adaptively transmitted/requested based on the viewpoint. Therefore, at least one of whether there is a unit/information requiring adaptive or differentiated request/response/processing/control in one flow, such as pose information/tracking information, whether there is a unit/information requiring dependent processing/control in one flow, pose information/tracking/control information, information for identifying the corresponding information, information for associating the corresponding information, and QoS characteristic information about the corresponding information may be added/defined and signaled.

The pose information may indicate a position and an orientation in a space relative to the XR space.
- The position in the XR space is a 3D-vector representing the position within a space and relative to the origin defined by the (x,y,z) coordinates.
- The orientation in the XR space is a quaternion representing the orientation within a space and defined by a four-dimensional or homogeneous vector with (x,y,z,w) coordinates, with w being the real part of the quaternion and x, y and z the imaginary parts.

The tracking information may include one or more of pose information, a position (of a specific node), orientation, rotation, a corresponding node identifier to be tracked, an available tracking state providing state, a center for tracking a current position and orientation of an XR UE (e.g., a head mount device), a direction, and a direction change.

As another example, QoS characteristic information considering periodically variable characteristics of the video stream may be added. For example, XR traffic may occur within +/- jitter with a specific period. For example, a jitter level/range occurring at a constant (reaching) period may be considered. And/or XR traffic may occur with a specific period and a magnitude in a specific range. For example, a maximum/minimum burst size/range of data generated at a predetermined (reaching) period may be considered. As another example, QoS characteristic information considering a non-integer period (e.g., 30 fps: 33.33 ms, 60 fps: 16.67 ms, 90 fps: 11.11 ms, 120 fps: 8.33 ms) characteristic of XR (video) traffic may be added. Information for indicating this may be used in signaling.

As another example, one or more pieces of information among an update rate, an update request/response, a packet size, a frame rate per second, and a roundtrip interaction delay tolerance of a video stream for supporting an XR application may be added as QoS characteristic information.

As another example, PDU-Set/MU specific QoS characteristic information may be added. For example, information for processing may be added considering whether separately processing PDU-Set/MU units is requested. Alternatively, information for processing in association with sub-flows/streams divided in PDU-Set/MU units in one QoS flow may be added. Alternatively, information (e.g., grouping identifier) for processing in association/grouping sub-flows/streams divided in PDU-Set/MU units having dependency (in one QoS flow) may be added. Alternatively, information for processing in association with sub-flows/streams divided in PDU-Set/MU units in one PDU session may be added. Alternatively, information for processing in association by dividing the application traffic indicated in the application/application layer/application server/PCF in PDU-Set/MU units may be added.

As another example, the corresponding QoS characteristic information may be defined and applied as a QoS profile (or a QoS parameter included in the QoS profile). The corresponding QoS characteristic information may be indicated in connection with 5QI. Alternatively, the corresponding QoS characteristic information may be indicated by defining additional/associated QoS-flow/PDU-Set level sub-indicator/identification information for 5QI. For example, a 5QI value associated with the PDU-Set level QoS characteristic information may be defined. This may be defined separately from the 5QI value associated with the packet level QoS characteristic information. A 5QI mapping table associated with the PDU-Set level QoS characteristic information may be defined to be distinguished from the 5QI mapping table associated with the packet level QoS characteristic information. Alternatively, a 5QI value that is not allocated in the 5QI mapping table associated with the packet level QoS characteristic information may be designated and defined. As another example, information for identifying that it is 5QI associated with the PDU-Set level QoS parameter may be defined and indicated.

The core network control plane node/entity (e.g., SMF/AMF) may include the corresponding 5QI/QoS characteristic information or the corresponding sub-indicator (through the PDU SESSION RESOURCE SETUP REQUEST message or the PDU SESSION RESOURCE MODIFY REQUEST message, or through the PDU Session Resource Setup Request Transfer IE or the PDU Session Resource Modify Request Transfer IE of the corresponding message) to the base station during the PDU session establishment/modification procedure.

In order to support scheduling considering the corresponding SQI/QoS characteristic information, the base station may configure a signaling radio bearer (SRB)/a data radio bearer (DRB) associated with the corresponding 5QI/QoS characteristic information/sub-indicator (configured with the corresponding 5QI/QoS characteristic information/sub-indicator). The base station may include information for indicating the SRB/DRB configuration information in the SRB/DRB configuration information and transmit the same to the UE through RRC signaling (e.g., RRC reconfiguration message). Alternatively, the base station may configure, in association, a configuration required to transmit the corresponding user plane data considering the corresponding traffic characteristic information in the corresponding DRB configuration information through RRC signaling (e.g., RRC reconfiguration message). For example, one or more configurations among configured grants, semi-persistent scheduling, and DRX configurations that consider/support the non-integer property of XR traffic may be configured in association with the corresponding DRB. Alternatively, one or more of LCP restrictions, packet duplication, and a CQI table for a specific target block error rate (e.g., 10 to the negative 5th power) may be configured for preferential processing of the logical channel associated with the corresponding DRB. For example, a corresponding logical channel may be configured by mapping to a configured grant configuration through RRC. Alternatively, the base station may allow the corresponding logical channel to use a dynamic grant indicating a specific physical priority level. Alternatively, to process the sub-flows/streams having dependency in association, the base station may include information for indicating the association between corresponding DRBs for the DRB associated with the corresponding sub-flow/stream. Alternatively, to process the sub-flows/streams, the base station may include information for indicating the association between corresponding logical channels for the logical channel associated with the DRB associated with the corresponding sub-flow/stream.

### ADU (PDU-Set) / MU-based packet filter add embodiment

In order to support effective delivery/transmission of the corresponding XR data in a mobile communication network, the application/application layer may add and provide any additional metadata/control field in each packet. For example, a field/information/indicator for identifying specific data traffic/flow/stream/unit of the corresponding application may be included on the application header. Through the corresponding field/information/indicator, the corresponding application stream/data/flow may be divided into sub-streams/data units/sub-flows/frames having different characteristics.

However, it may be difficult to utilize the corresponding information/parameter on the application layer in all of the nodes of the mobile communication network. For example, (deep) packet inspection may be required to utilize the corresponding information. This may be preferable to perform at an end-to-end node (e.g., UE or user plane function (UPF)) of the mobile communication network rather than at all nodes (e.g., UE, base station, and UPF) that process user plane data. The corresponding information may include any information generated on XR media processing (e.g., signaling, transmission, codec, format).

In downlink, incoming data packets may be classified by priority based on a packet filter set of a downlink packet detection rule (PDR). The user plane function (UPF) may carry the user plane traffic classification belonging to one QoS flow through the N3 user plane marking using the QFI. Alternatively, different user plane traffic classifications (e.g., sub-stream/data unit/sub-flow/frame) belonging to one QoS flow may be additionally classified using an identifier (described above) and/or a packet filter set (to be described below). Such different user plane traffic classifications may be carried through corresponding N3 user plan marking.

For the corresponding PDU session in the uplink, the UE may evaluate the uplink packet for the uplink packet filter in the packet filter set in the QoS rule in ascending order based on the priority of the QoS rule until the matching QoS rule is found. The UE may bind the uplink packet to the QoS flow using a QoS flow identifier (QFI) matching the corresponding QoS rule. Alternatively, the UE may additionally classify different user plane traffic (e.g., sub-stream/data unit/sub-flow/frame) belonging to one QoS flow using a packet filter set described below and bind the uplink packet to the corresponding sub-QoS flow using the identifier and/or corresponding additional indication information described in the disclosure.

The core network entity (e.g., UPF) interworking with the data network DN including a corresponding server or XR application server or XR application in the UE may separate the corresponding application stream/flow/QoS-flow into different sub-streams/data units/sub-flows/frames using the corresponding information. For example, the core network entity may add/mark the QoS flow identifier (QFI) so that the corresponding sub-stream/data unit/sub-flow/frame is distinguished and mapped to a different QoS flow. As another example, the core network entity may divide corresponding applications/QoS-flows in one application/QoS-flow into different sub-streams/data units/sub-flows/frames. To identify/distinguish this, a sub/additional identifier associated with the QFI/5QI may be defined and marked. A sub/additional identifier (e.g., a QFI/5QI/sub-indicator of an object having dependency and/or a group identifier for distinguishing a group having dependency) may be defined and marked in order to associate/group and process sub-streams/data units/sub-flows/frames having dependency.

The core network entity may associate the corresponding application stream/flow/QoS-flow to the sub-stream/data unit/sub-flow/frame. Alternatively, an identifier may be defined to be used instead of QFI/5QI. Alternatively, the corresponding identifier may be signaled by applying 5QI, which is dynamically allocated (defined by the operator). For example, the corresponding QoS characteristic information (e.g., dynamic 5QI descriptor IE) may be signaled from the core network control plane entity to the base station as a portion of the corresponding QoS profile with a non-standardized or non-preconfigured 5QI value.

As another example, there may be QoS flows that require associated QoS processing in the corresponding application. Information for grouping QoS flows requiring associated QoS flow processing may be defined. Information for identifying a group of QoS flows requiring associated QoS flow processing in the UE or the UPF may be additionally marked. As another example, a representative/default QFI/5QI for one QoS-flow of the corresponding application and a QFI/5QI for the sub-stream/data unit/sub-flow/frame associated to the corresponding QoS-flow may be associated and/or simultaneously provided.

As described above, a sub-stream/data unit/sub-flow/frame may be distinguished through any field/information included by the corresponding application header and information capable of distinguishing units in the application. The corresponding information may be received from the PCF to the core network entity (e.g., AMF/SMF/UPF) or may be received from the XR application server/application function to the core network entity (e.g., AMF/SMF/UPF). And/or the corresponding information may be set by a local configuration.

The XR application server in the UE or the XR application server may separate the corresponding application stream into different sub-streams/data units/sub-flows/frames using the corresponding information. The application sub-stream/data unit/sub-flow/frame separated using one or more of the packet filters below may be distinguished.

(For IP PDU session type), the packet filter set should support a packet filter based on at least any combination below.
- ADU-type
- Fame-type: P-frame, I-frame, B-frame
- Traffic-type: voice, video, haptic, pose information, tracking information
- Media Units (MUs)-type: haptic information, updated pose information, tracking information video, voice,
- Priority/Importance indication
- Source/destination IP address or IPv6 prefix.
- Source / destination port number.
- Protocol ID of the protocol above IP/Next header type.
- Type of Service (TOS) (IPv4) / Traffic class (IPv6) and Mask.
- Flow Label (IPv6).
- Security parameter index.
- Packet Filter direction.
- Application Identifier: Index for identifying application detection rule set configured in UPF
- Application Identifier: Information for identifying the corresponding (XR) application
- Information for identifying the corresponding packet filter set

For example, the UE or UPF may filter packets for each of PDU-Set/frame/Traffic/MU type in any application. Signaling for indicating this may be provided. For example, the core network control plane entity (e.g., SMF/AMF) may configure corresponding packet filtering for the corresponding XR application (or QoS flow(s) of the corresponding application) during the PDU session establishment/modification procedure. Alternatively, the core network control plane entity (e.g., SMF/AMF) may activate/deactivate the corresponding packet filtering for the corresponding XR application (or for the QoS flow(s) of the corresponding application) during the PDU session establishment/modification procedure. Alternatively, when the PCC rule is activated/deactivated by the PCF, the core network control plane entity (e.g., SMF/AMF) may include one or more pieces of information included in the above-described packet filter set and information for indicating activation/deactivation and transmit the same to the UPF/UE in order to activate/deactivate/execute the rule based on the corresponding packet filter in the UPF/UE. For example, packet filtering in units of sub-stream/data unit/sub-flow/frame may be activated/deactivated and effectively controlled.

The core network control plane entity may transmit information for indicating filtering request/activation/deactivation to the UPF through the corresponding packet filter set. The core network control plane entity may transmit information for indicating the filtering request/activation/deactivation through the corresponding packet filter configured to the UE. The information for indicating the packet filtering request/activation/deactivation may include the above-described information for the corresponding packet filtering. The corresponding information may be received from the PCF or from the XR application server/application function. And/or the corresponding information may be set by a local configuration.

As another example, the core network control plane entity (e.g., session management function (SMF)/access and mobility management function (AMF)) may bind the policy and charging control (PCC) rule to the corresponding QoS flow/sub-stream/data unit/sub-flow/frame. The SMF may allocate one or more pieces of information included in the QFI/5QI/dynamic-5QI-descriptor/information for identifying the corresponding sub-stream/sub-flow/above-described QoS characteristic information to one QoS flow/sub-stream/data unit/sub-flow/frame and determine/derive the QoS profile. For example, the SMF may determine/derive a traffic jitter range associated with an uplink/downlink traffic period of the corresponding QoS flow. During the PDU session establishment/modification procedure, the SMF may instruct the UPF to calculate/derive the traffic jitter range associated with the uplink/downlink traffic period of the corresponding QoS flow, and the UPF may derive the traffic jitter range associated with the uplink/downlink traffic period of the corresponding QoS flow and transmit the same to the SMF. The corresponding UPF instructions and QoS rule may be bound to the corresponding QoS flow/sub-stream/data unit/sub-flow/frame provided by the PCF from the PCC rule. For each PCC rule bound to the corresponding QoS flow/sub-stream/data unit/sub-flow/frame, the SMF may include one or more pieces of information among any information (e.g., QoS characteristic information, packet marking information, packet filter set information, or 5QI/QFI/sub-indicator) included in the disclosure to enable classification/ bandwidth execution, and marking for the user plane traffic and provide the same to the UPF.

The UPF may include additional information (e.g., any information (e.g., QoS characteristic information, packet marking information, packet filter set information, or 5QI/QFI/sub-indicator) included in the disclosure) in the GTP-U header having 5QI/QFI and encapsulate the same. Alternatively, the UPF may include additional information in the GTP-U header associated with 5QI/QFI and encapsulate the same. Alternatively, additional information may be included in the DL PDU session information included in the PDU session user plane protocol. Alternatively, the UPF may include additional information when the corresponding indication information is received/configured/applied/set (from another core network entity).

As another example, the base station may include additional information in the GTP-U header having 5QI/QFI and encapsulate the same. Alternatively, the UPF may include additional information in the GTP-U header associated with 5QI/QFI and encapsulate the same. Alternatively, additional information may be included in the UL PDU session information included in the PDU session user plane protocol. Alternatively, the base station may include additional information when the corresponding indication information is received/configured/applied/set (from another core network entity).

As another example, the UE classifies and marks uplink user plane traffic. The QoS rule for this may be explicitly provided to the UE. For example, the corresponding QoS rule may be signaled from the core network entity AMF/SMF to the UE through a message in the processor using the PDU session establishment/modification procedure. Alternatively, the corresponding QoS rule may be preconfigured in the UE.

The UE may additionally classify different user plane traffic (e.g., sub-stream/data unit/sub-flow/frame) belonging to one QoS flow. This is achieved using a packet filter set, which will be described below. The UE then bind the uplink packet to the corresponding sub-QoS flow using the identifier and/or corresponding additional indication information provided in the disclosure.

The base station may indicate configuration information for associating/mapping the corresponding QoS flow/sub-stream/data unit/sub-flow/frame to the DRB to the UE through RRC signaling (e.g., RRC reconfiguration message).

For example, the service data adaptation protocol (SDAP) configuration may include one or more pieces of information included in the QFI, 5QI, and dynamic-5QI-descriptor for the mapped QoS flow/sub-stream/data unit/sub-flow/frame, information for identifying the corresponding sub-stream/data unit/sub-flow/frame, and one or more pieces of QoS characteristic information described above.

As another example, the corresponding SDAP may be defined and used to have a header of a format different from that of the SDAP header for the DL Data PDU having the RDI, RQI, and QFI fields. For example, the corresponding header may be configured by including/adding one or more pieces of information/fields among one or more pieces of information included in the QFI, 5QI, dynamic-5QI-descriptor, information for identifying the corresponding sub-stream/data unit/sub-flow/frame, the above-described QoS characteristic information, and header version information for the QoS flow/sub-stream/data unit/sub-flow/frame without RDI and RQI fields. As another example, the corresponding header may be configured by including/adding one or more pieces of information/fields among one or more pieces of information included in the QFI, 5QI, and dynamic-5QI-descriptor, information for identifying the corresponding sub-stream/data unit/sub-flow/frame, the above-described QoS characteristic information, and header version information for the QoS flow/sub-stream/data unit/sub-flow/frame.

As another example, the corresponding SDAP may be defined and used to have a header, which is different from the SDAP header for the UL Data PDU having D/C, R, and QFI fields. As an example, the corresponding header may be configured by including/adding one or more pieces of information/fields among one or more pieces of information included in the QFI, 5QI, and dynamic-5QI-descriptor, information for identifying the corresponding sub-stream/data unit/sub-flow/frame, the above-described QoS characteristic information, and header version information for the QoS flow/sub-stream/data unit/sub-flow/frame.

Information included in the above-described signaling/UE operation/core network entity (AMF/SMF/PCF/UPF/NEF/AF) operation/base station operation may include one or more pieces of information for dividing units in the application, header information in the application, PDU-Set-type/frame-type/traffic-type/MU-type (divided through information for dividing units in the application) or identifier/index information for identifying the same, information for identifying the group for sub-streams/data units/sub-flows/frames requiring associated QoS flow processing, sub-indicator/identifier/index information for identifying the QFI or the PDU-Set/frame/MU/traffic/sub-stream/sub-flow associated with the QFI, sequence number in PDU-Set-type/frame-type/traffic-type/MU-type, end mark (e.g., Indicates if this is the last packet in the unit, information for indicating the end/last PDU of the corresponding PDU Set) for the PDU-Set-type/frame-type/traffic-type/MU-type sub-stream/data unit/sub-flow/frame, data/traffic/service type (The data type of the unit, PDU-Set/frame/Traffic/MU type), importance/priority (assigned relative Priority/importance information in the same flow), corresponding unit/packet generation/transmission timestamp/local time, corresponding unit/packet reception timestamp/local time, downlink/uplink jitter (e.g., the sum of the jitter incurred in NG-RAN (including the jitter at gNB-CU-UP, on F1-U and on gNB-DU) and the jitter over Uu interface for the corresponding PDU-Set/frame/MU/traffic/sub-stream/sub-flow, or difference between the time of arrival/reception/transmission of the actual unit and the time of a specific/indicated/preconfigured period for the corresponding PDU-Set/frame/MU/traffic/substream/sub-flow, corresponding downlink/uplink jitter indication information (e.g., one-bit information for indicating the presence of the corresponding information), downlink/uplink delay (e.g., the sum of the delay incurred in NG-RAN (including the delay at gNB-CU-UP, on F1-U and on gNB-DU) and the delay over Uu interface for the corresponding PDU-Set/frame/MU/traffic/sub-stream/sub-flow), corresponding downlink/uplink delay indication information (e.g., one-bit information for indicating the presence of the corresponding information), and any information for dividing units through the fields/information included in the application header.

Embodiment of indication of XR-related information through core network

### assistance information/UE assistance information/NAS signaling

The core network entity may provide assistance information for supporting effective scheduling of XR data to the base station. Alternatively, the UE may provide assistance information for supporting effective scheduling of XR data to the base station/core network entity.

During the PDU session establishment/modification procedure or during handover, the base station may receive assistance information from the core network control plane entity. The core network control plane entity (e.g., SMF/AMF) may transmit the corresponding assistance information to the base station during the PDU session establishment/modification procedure (through the PDU SESSION RESOURCE SETUP REQUEST message or the PDU SESSION RESOURCE MODIFY REQUEST message, or through the PDU Session Resource Setup Request Transfer IE or the PDU Session Resource Modify Request Transfer IE of the corresponding message). The assistance information received from the corresponding core network control plane entity may include information for the corresponding XR traffic flow. For example, the assistance information may include corresponding traffic characteristic information. One or more pieces of information among burst arrival time, periodicity, flow/sub-stream/data unit/sub-flow/frame direction, jitter level/range occurring at a specific arrival period, maximum/minimum burst size/range of data occurring at a specific arrival period, (pose information/tracking information/control information) update/change/sampling rate/period/duration, packet size, frame rate per second, roundtrip interaction delay tolerance, multi-modal synchronization threshold, synchronization threshold between multi-sub-streams/data units/sub-flows/frames, multi-substream/data unit/sub-flow/frame association/grouping information may be added as QoS characteristic information. Alternatively, one or more pieces of information among the QoS characteristics information for the XR application described above may be included. Alternatively, one or more pieces of information included in the packet filter set described above may be included. Alternatively, one or more pieces of information included in the above-described signaling/UE operation/core network entity (AMF/SMF/PCF/UPF/NEF/AF) operation/base station operation may be included.

The above-described assistance information may be defined as a core network entity (e.g., AMF/SMF) associated parameter and transmitted to the base station. For example, the AMF/SMF may derive the corresponding assistance information. For example, the core network entity may derive the corresponding information based on statistics/pattern for the corresponding application through the PDU session establishment/modification/release procedure, the corresponding QoS characteristic information provided through NAS signaling, or the like. For example, the above-described assistance information may be traffic/QoS characteristic information (e.g., expected value/average, deviation, standard deviation, minimum, maximum, or any statistics/statistical amount) statistically/empirically obtained/calculated/derived. If the corresponding parameter value is changed, the PDU session modification procedure may be applied. The core network entity (e.g., AMF/SMF) may store the corresponding parameter in the PDU session context. The parameter may be associated with the sub-stream/data unit/sub-flow/frame.

The UE/application server/application function may provide a policy for the flow/sub-stream/data unit/sub-flow/frame associated with the application to the core network entity (e.g., AMF/SMF/PCF). The policy may include one or more pieces of information among the UE and the data flow set, the triggering event associated with expected QoS handling, and coordination information. The policy may be transmitted to the AMF/SMF through the network exposure function (NEF). For example, if the corresponding application session is established/modified or if the corresponding parameter value is changed, the corresponding information may be transmitted. The corresponding information is a data flow set associated with the application and may include tactile and/or multi-modal data. The multi-modal data is defined as describing the input data from different types of devices/sensors or output data to different destinations (e.g., one or more UEs) required for the same task or application. The multi-modal data consists of one single modal data or more. And each single modal data is strongly dependent on each other. The single modal data may be viewed as one type data. More seamless and natural communication may be possible by combining inputs from one or more sources and/or outputs to one or more destinations.

A multi-modal synchronization threshold may be defined. This may be defined as a temporal separation for the start of two maximum tolerable stimuli (e.g., one sense and another sense). Through this, the accompanying sensory object may be recognized as synchronized. For example, voice and tactile sense should have a synchronization threshold within at least +/- 40 ms accuracy.

For the corresponding application, video/audio media, information (e.g., brightness, temperature, humidity, etc.) recognized by a sensor related to the environment, haptic data (the feel when touching a surface (e.g., pressure, texture, vibration, temperature), or kinetic senses (e.g., gravity, pull forces, sense of position awareness) may be included. For example, the sampling rate of the haptic device for remote operation may reach 1000 times per second.

The UE/application function/application server may provide information including application traffic characteristics and/or service/QoS requirements to the base station/core network entity (AMF/SMF/PCF). For example, the packet size for haptic data relates to degrees of freedom (DOF) supported by the haptic device, and the packet size for one DOF is 2-8 bytes, and the haptic device may generate and transmit 500 haptic packets per second. The application server may transmit audio/video data and haptic data with different periods. For example, when a video associated with one session is transmitted at 60 frames per second and the sampling rate for haptic information associated with the session is 500 times per second, the corresponding application may transmit packets associated with the video frame every 16.7 ms and may transmit packets including the corresponding haptic information every 2 ms. Video data and haptic data may be transferred through two separate service data flows in one single session. Alternatively, video data and haptic data may be transferred through the separated service data flows of the two sessions.

As another example, the corresponding assistance information may be provisioned/provided from the application server OAM (Operations, Administration and Maintenance) to the AMF/SMF/PCF through the NEF. Alternatively, the corresponding assistance information may be provisioned/provided from the AF to the AMF/SMF/PCF. Alternatively, the corresponding assistance information may be determined by a node providing a specific function for the corresponding XR application (for convenience of description, this is indicated as an XR function (XRF)) and may be provisioned/provided to the AMF/SMF/PCF.

As another example, the corresponding assistance information may be transmitted to the core network entity through non-access stratum (NAS) signaling. For example, the UE may transmit the control stream/data/information to the core network entity/application function/application server through NAS signaling for effective control of the corresponding application. As another example, the UE may transmit pose information (or updated pose information) to the core network entity (e.g., AMF, SMF)/application function/application server through NAS signaling for an adaptive media control request. As another example, the UE may transmit traffic characteristic information or QoS characteristic information desired/expected by the UE to the core network entity (e.g., AMF, SMF)/application function/application server through NAS signaling for corresponding application control.

As another example, the corresponding assistance information may be transmitted to the base station through a UE assistance information RRC message (or any uplink RRC message). The UE may configure a prohibit timer for restricting the transmission of the corresponding assistance information in the UE. When the UE starts transmitting the UE assistance information message including the corresponding information, the UE may start by setting the prohibit timer associated with the corresponding information as the timer value received by the base station. If the UE has not provided the UE's assistance information since the UE is configured to provide the corresponding information, the UE may start the timer set to the timer value indicated to the base station if that indicated in the last transmission of the UE assistance information message including the UE's assistance information differs from the current UE assistance information, and the corresponding prohibit timer is not operating. The UE may initiate transmission of the UE assistance information message to the base station.

As another example, the corresponding assistance information may be transmitted to the base station through the MAC CE. A prohibit timer for restricting the transmission of the corresponding assistance information in the MAC entity may be configured in the UE. If the prohibit timer is not running, the UE may generate and transmit the MAC CE to the base station. The UE may start the corresponding prohibit timer. The base station may indicate information for indicating that the transmission/function of the corresponding MAC CE is supported/allowed/requested to the UE. For example, it may be indicated to the UE through system information. Alternatively, it may be indicated to the UE through an RRC reconfiguration message. Alternatively, this may be indicated through the downlink MAC CE.

According to the embodiments described above, information/fields used on the running service/application from the higher layer may be additionally utilized to associate with the sub-QoS flow or support the fame-level QoS ADU-based QoS, XR specific QoS.

Hereinafter, the configurations of the core network control plane entity and base station will be described.

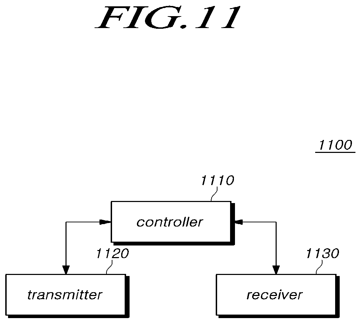

FIG. 11 is a block diagram illustrating a core network control plane node according to an embodiment.

Referring to FIG. 11, a core network control plane node 1100 controlling data traffic may include a receiver 1130 to configured to receive, from an application function control entity, one or more pieces of information among assistance information for an application traffic characteristic, a PDU-Set QoS parameter, an identifier for grouping flows belonging to a multi-modal application, and a synchronization threshold, a transmitter 1120 configured to transmit, to a base station during a PDU session establishment or modification procedure, one or more of the assistance information for the application traffic characteristic, the PDU Set QoS parameter, the identifier for grouping the flows belonging to the multi-modal application, and the synchronization threshold, and a controller 1110 configured to control operations for instructing a core network user plane node to transmit a user packet including PDU-Set information.

For example, the assistance information for the application traffic characteristics may include at least one of i) periodic information for uplink or downlink traffic of the QoS flow and ii) jitter range information associated with the periodic information. In other words, the assistance information may include i) periodic information on a period of generating the uplink data traffic or downlink data traffic and ii) the jitter range information associated with the corresponding period information.

The period information for uplink or downlink traffic may support a non-integer value. For example, the period information for uplink or downlink traffic may be set to a non-integer value as well as an integer value.

As another example, the PDU-Set QoS parameter may include a parameter indicating a service quality set in association with the PDU-Set.

As another example, with an identifier for grouping flows belonging to a multi-modal application, data flows belonging to an application configured to exchange information through various interfaces may be grouped into one or more. In this case, the corresponding grouping may be performed through the identifier for grouping flows belonging to the multi-modal application. Alternatively, the corresponding groups may be distinguished through the identifier for grouping flows belonging to the multi-modal application.

As another example, a synchronization threshold may include threshold information for a delay time difference between flows associated with the multi-modal application having one group identifier. Further, the synchronization threshold may be set in association with the identifier for grouping flows belonging to the multi-modal application.

The assistance information may be received from the application function. The assistance information may be generated by the core network control plane node. When the core network control plane node generates assistance information, the application function may initiate the generation of the assistance information.

When receiving the information from the application function control entity, the receiver 1120 may transfer the corresponding information to the base station. To that end, the transmitter 1120 may use an interface between the core network and the base station.

Alternatively, the transmitter 1120 may include the above-described information in the message used in the PDU session establishment or modification procedure and transfer the message to the base station. For example, the above-described information may be included in a message defined within a corresponding procedure such as a PDU session establishment/modification request message, a PDU session establishment/modification response message, a PDU session establishment/modification complete message, or the like. As another example, the above-described information may be included in a PDU SESSION RESOURCE SETUP REQUEST message or a PDU SESSION RESOURCE MODIFY REQUEST message.

The controller 1110 may perform controlling operations to transmit PDU-Set information for application data traffic to the core network user plane node. For example, the core network user plane node may be a user plane function (UPF). The core network user plane node may transmit the user plane information to the base station using the received PDU-Set information.

For example, the PDU-set information may include at least one of a PDU-Set sequence number, a PDU-Set end PDU, and PDU-Set importance. Further, the core network user plane node may transfer the received PDU-Set information to the base station.

Further, the controller 1110 controls the overall operation of the core network control plane 1100 according to the method for controlling traffic based on traffic characteristics identified based on the information/field used on the running service/application from the higher layer in the method for controlling traffic required to perform the disclosure described above.

The transmitter 1120 and the receiver 1130 are used to transmit or receive signals or messages or data necessary for performing the above-described embodiments, with the base station, another core network entity, and the like.

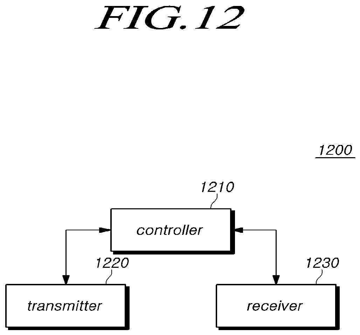

FIG. 12 is a block diagram illustrating a base station according to an embodiment.

Referring to FIG. 12, a base station 1200 controlling data traffic includes a receiver 1230 configured to receive, from a core network control plane node, one or more pieces of information, such as assistance information for an application traffic characteristic, a PDU-Set QoS parameter, an identifier for grouping flows belonging to a multi-modal application, and a synchronization threshold, and a controller 1210 configured to set up a radio bearer for application traffic using information received from the core network control plane node. The receiver 1230 may further receive PDU-set information from the core network user plane node.

For example, the assistance information for the application traffic characteristics may include at least one of i) periodic information for uplink or downlink traffic of the QoS flow and ii) jitter range information associated with the periodic information. In other words, the assistance information may include i) period information on a period of generating the uplink data traffic or downlink data traffic and ii) the jitter range information associated with the corresponding period information.

The period information for uplink or downlink traffic may support a non-integer value. For example, the period information for uplink or downlink traffic may be set to a non-integer value as well as an integer value. For example, the period information may be set to support up to a decimal point, such as O.XXXms.

As another example, the PDU-Set QoS parameter may include a parameter indicating a service quality set in association with the PDU-Set.

As another example, with an identifier for grouping flows belonging to a multi-modal application, data flows belonging to an application configured to exchange information through various interfaces may be grouped into one or more. In this case, the corresponding grouping may be performed through the identifier for grouping flows belonging to the multi-modal application. Alternatively, the corresponding groups may be distinguished through the identifier for grouping flows belonging to the multi-modal application.

As another example, a synchronization threshold may include threshold information for a delay time difference between flows associated with the multi-modal application having one group identifier. Further, the synchronization threshold may be set in association with the identifier for grouping flows belonging to the multi-modal application. The above-described information may be generated by the application function or the core network control plane node.

The receiver 1230 may receive the above-described information through an interface between the core network and the base station. For example, the base station may receive the above-described information from the core network control plane node through a message used in the PDU session establishment or modification procedure. For example, the above-described information may be included in a message defined within a corresponding procedure such as a PDU session establishment/modification request message, a PDU session establishment/modification response message, a PDU session establishment/modification complete message, or the like. As another example, the above-described information may be included in a PDU SESSION RESOURCE SETUP REQUEST message or a PDU SESSION RESOURCE MODIFY REQUEST message.

The controller 1210 may configure a radio bearer for application data traffic using the received information. The corresponding radio bearer may be configured to match the characteristic information about the application data traffic and may be configured to transmit/receive data according to a period set to a non-integer value.

Meanwhile, the PDU-set information may include at least one of a PDU-Set sequence number, a PDU-Set end PDU, and PDU-Set importance.

Further, the core network user plane node may transfer the PDU-Set information to the base station.

Further, the controller 1210 controls the overall operation of the base station 1200 according to the method for controlling traffic based on traffic characteristics identified based on the information/field used on the running service/application from the higher layer in the method for controlling traffic required to perform the disclosure described above.

The transmitter 1220 and the receiver 1230 are used to transmit or receive signals or messages or data necessary for performing the above-described embodiments, with the UE, core network entity and the like.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

The instant patent application claims priority under 35 U.S.C. 119(a) to Korean Patent Application Nos. 10-2022-0013336 and 10-2023-0009857, filed on January 28, 2022 and January 26, 2023, respectively, in the Korean Intellectual Property Office, the disclosures of which are herein incorporated by reference in their entireties. The present patent application claims priority to other applications to be filed in other countries, the disclosures of which are also incorporated by reference herein in their entireties.

## Claims

1. A method for controlling data traffic by a core network control plane node, the method comprising:
receiving, from an application function control entity, information including assistance information for an application traffic characteristic, a PDU-Set QoS parameter, an identifier for grouping flows belonging to a multi-modal application, and a synchronization threshold;
transmitting, to a base station during a packet data unit (PDU) session establishment or modification procedure, the assistance information for the application traffic characteristic, the PDU Set QoS parameter, the identifier for grouping the flows belonging to the multi-modal application, and the synchronization threshold; and
controlling a core network user plane node to transmit a user packet including PDU-Set information.

2. The method of claim 1, wherein the assistance information for the application traffic characteristic includes at least one of i) period information for uplink or downlink traffic of a QoS flow and ii) jitter range information associated with the period information.

3. The method of claim 2, wherein the period information for the uplink or downlink traffic
supports a non-integer value.

4. The method of claim 1, wherein:
the synchronization threshold includes threshold information for a delay time difference between flows associated with a multi-modal application having one group identifier; and
the synchronization threshold is set in association with the identifier for grouping the flows belonging to the multi-modal application.

5. The method of claim 1, wherein the PDU-set information includes at least one piece of information including a PDU-Set sequence Number, a PDU-Set end PDU, and a PDU-Set importance, and the PDU set information is transferred to the base station by the core network user plane node.

6. A method for controlling data traffic by a base station, the method comprising:
receiving, from a core network control plane node, one or more pieces of information including assistance information for an application traffic characteristic, a PDU-Set QoS parameter, an identifier for grouping flows belonging to a multi-modal application, and a synchronization threshold;
configuring a radio bearer for application traffic using the received information ; and
receiving packet data unit (PDU)-Set information from the core network user plane node.

7. The method of claim 6, wherein the assistance information for the application traffic characteristic includes at least one of i) period information for uplink or downlink traffic of a QoS flow and ii) jitter range information associated with the period information.

8. The method of claim 7, wherein the period information for the uplink or downlink traffic supports a non-integer value.

9. The method of claim 6, wherein:
the synchronization threshold includes threshold information for a delay time difference between flows associated with a multi-modal application having one group identifier; and
the synchronization threshold is set in association with the identifier for grouping the flows belonging to the multi-modal application.

10. The method of claim 6, wherein the PDU-set information includes at least one piece of information including a PDU-Set sequence number, a PDU-Set end PDU, and a PDU-Set importance.

11. A core network control plane node controlling data traffic, comprising:
a receiver configured to receive, from an application function control entity, one or more pieces of information including assistance information for an application traffic characteristic, a packet data unit (PDU)-Set QoS parameter, an identifier for grouping flows belonging to a multi-modal application, and a synchronization threshold;
a transmitter configured to transmit to a base station during a PDU session establishment or modification procedure, one or more of the assistance information for the application traffic characteristic, the PDU Set QoS parameter, the identifier for grouping the flows belonging to the multi-modal application, and the synchronization threshold; and
a controller configured to instruct a core network user plane node to transmit a user packet including PDU-Set information.

12. The core network control plane node of claim 11, wherein the assistance information for the application traffic characteristic includes at least one of i) period information for uplink or downlink traffic of a QoS flow and ii) jitter range information associated with the period information.

13. The core network control plane node of claim 12, wherein the period information for the uplink or downlink traffic supports a non-integer value.

14. The core network control plane node of claim 11, wherein:
the synchronization threshold includes threshold information for a delay time difference between flows associated with a multi-modal application having one group identifier; and
the synchronization threshold is set in association with the identifier for grouping the flows belonging to the multi-modal application.

15. The core network control plane node of claim 11, wherein the PDU-set information includes at least one piece of information including a PDU-Set sequence Number, a PDU-Set end PDU, and a PDU-Set importance and is transferred to the base station by the core network user plane node.

16. A base station controlling data traffic, comprising:
a receiver configured to receive, from a core network control plane node, one or more pieces of information including assistance information for an application traffic characteristic, a PDU-Set QoS parameter, an identifier for grouping flows belonging to a multi-modal application, and a synchronization threshold; and
a controller configured to set up a radio bearer for application traffic using information received from the core network control plane node,
wherein the receiver further receives PDU-Set information from a core network user plane node.

17. The base station of claim 16, wherein the assistance information for the application traffic characteristic includes at least one of i) period information for uplink or downlink traffic of a QoS flow and ii) jitter range information associated with the period information.

18. The base station of claim 17, wherein the period information for the uplink or downlink traffic supports a non-integer value.

19. The base station of claim 16, wherein:
the synchronization threshold includes threshold information for a delay time difference between flows associated with a multi-modal application having one group identifier; and
the synchronization threshold is set in association with the identifier for grouping the flows belonging to the multi-modal application.

20. The base station of claim 16, wherein the PDU-set information includes at least one piece of information including a PDU-Set sequence number, a PDU-Set end PDU, and a PDU-Set importance.
